# EUROPEAN PATENT APPLICATION

(11) **EP 4 059 808 A1**
(43) Date of publication of application: **21.09.2022**
(21) Application number: 22163074.2
(22) Date of filing: 18.03.2022
(51) Int. Cl.: B62B 1/00, B62B 1/12, B62B 5/06, B62B 1/14

(54) **REMOVABLE TRANSPORT DEVICE AND CARRIAGE GROUP OF A BAG**

(30) Priority: 18.03.2021 IT 202100006521
(71) Applicant: Segurini, Angelo, 48121 Revenna (IT)
(72) Inventor: Segurini, Angelo, 48121 Revenna (IT)
(74) Representative: Studio Torta S.p.A.

(57) **Abstract**

Removable transport device (1) to carry a load (2) and intended, in use, to be towed by a user; which includes two side bars (3a and 3b) intended to be connected to a harness device (4) wearable by a user; a spacer between the side bars (3a and 3b) connecting them in a releasable way and keeping them parallel and at a determined distance from each other; a rolling group (5); and a basic structure (6) connected in a releasable way to the rolling group (5) and including a crossbar (7) parallel to said spacer (13), two connection units (8a and 8b) for connecting in a releasable way the side bars ( 3a and 3b) to the crossbar (7).

## Description

### CROSS-REFERENCE TO RELATED APPLICATIONS

This Patent Application claims priority from Italian Patent Application No. 102021000006521 filed on March 18, 2021.

### FIELD OF THE ART

The hereby invention relates to a removable transport device and to a carriage group of a bag.

In particular, the hereby invention finds advantageous but not exclusive application in the hiking sector, and even more particularly in the field of trekking or hiking, to which the following description will make explicit reference without thereby losing generality.

### BACKGROUND OF THE INVENTION

In recent years, hiking, or sports based on walking along usually difficult paths (such as mountain trails), has had a significant spread and more and more people of all kinds and ages approached this activity. One of the main difficulties, or in any case problems, for users who practice hiking is certainly linked to the need to bring with them at least the food and various objects that could be useful during their activity. These objects are usually carried by the user inside a bag or backpack, which the user carries on his shoulders.

However, carrying a bag or backpack on the back, especially when of considerable weight, greatly increases the difficulty in carrying out the hiking activity and in some cases, for example when the weight is excessive or when the load is transported for long periods, may cause problems and, in the worst cases, damage, more or less severe to the user's back.

In order to try to overcome these problems, some users, in addition to using increasingly high-performance bags or backpacks, for example equipped with padding and stiffeners to better distribute the load, have begun to employ trolleys or other transport devices to transport food and various objects that could be useful during the hiking activity. However, the use of such known trolleys or transport devices has numerous drawbacks, among which we mention the followings.

Known trolleys or transport devices are uncomfortable to tow, especially on rough and uneven paths and are often not stable and strong enough to withstand the stresses transferred from the ground during use, so they may break.

Furthermore, the known trolleys or transport devices have considerable weights and above all dimensions, which can represent a problem both during use, for example when the paths are so impervious as to make it impossible to tow the trolley or the transport device, which must therefore be transported by the user with increasing difficulty as the weight and dimensions increase, or when the trolley or the transport device is not used and must be stored, as it takes up a lot of space. The aforementioned drawbacks with reference to the hiking stretch of road remain valid for any activity that requires the transport of loads of any type, in particular on inaccessible and difficult to reach sections with other transport devices, such as shopping bags, bags (or devices) for the transport of pets, etc.

The object of the present invention is to propose a transport device that can be disassembled for transporting a load and a carriage group of a bag, which allow to overcome the drawbacks described above and, at the same time, are easy and inexpensive to implement.

### SUMMARY

In compliance with the present invention, a removable transport device and a carriage group of a bag are proposed, according to what is claimed in the attached independent claim, and preferably, in any one of the claims directly or indirectly dependent on the aforementioned independent claim.

The claims describe preferred embodiments of the present invention forming an integral part of the present description.

### BRIEF DESCRIPTION OF THE DRAWINGS

The present invention will now be described with reference to the attached drawings, which illustrate a non-limiting example of embodiment, in which:
- Figure 1 illustrates an exploded view of a removable transport device in accordance with a main embodiment of the invention;
- Figure 1A illustrates the various components of the transport device of the invention disassembled and arranged near a common packet of handkerchiefs, indicated with P, to make it even more evident how the transport device of the invention, once disassembled, is of small size and easily transportable inside one common bag or envelope;
- Figure 2 illustrates a schematic and perspective view of a carriage group of a bag which includes the removable transport device of Figure 1 during use;

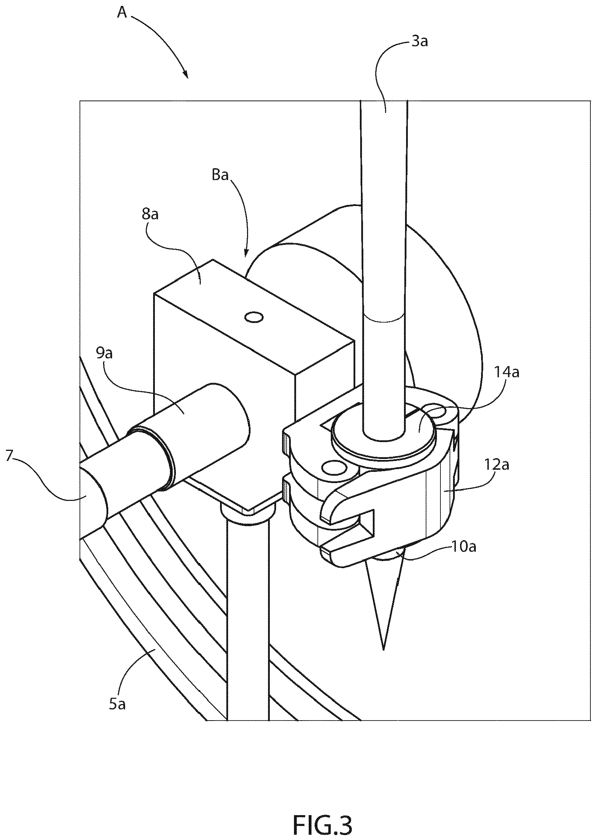

- Figure 3 illustrates detail A of Figure 2 on an enlarged scale and in an angle modified for clarity;
- Figure 4 illustrates detail B of Figure 2 on an enlarged scale; and
- Figure 5 illustrates a possible embodiment of a side bar of the removable transport device.

### DETAILED DESCRIPTION

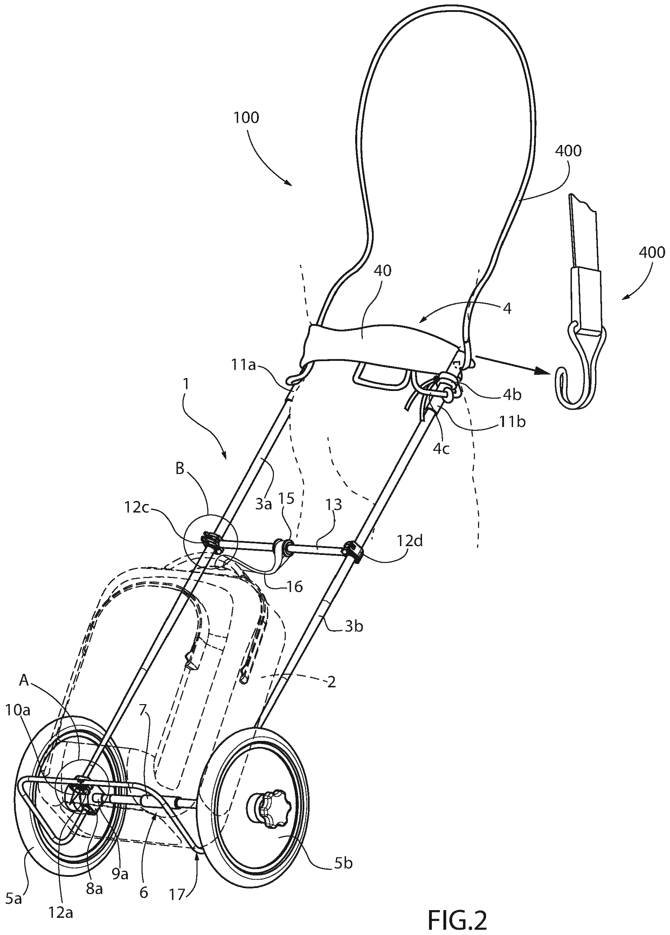

In the attached figures, 1 denotes, as a whole, a removable transport device configured to transport a load 2 and intended, in use, to be towed by a user, as schematically and partially illustrated in figure 2.

In detail, the removable transport device 1 of the invention is particularly suitable to be used for transporting a bag 2 or a trekking backpack 2, to which the following description will make explicit reference without thereby losing generality.

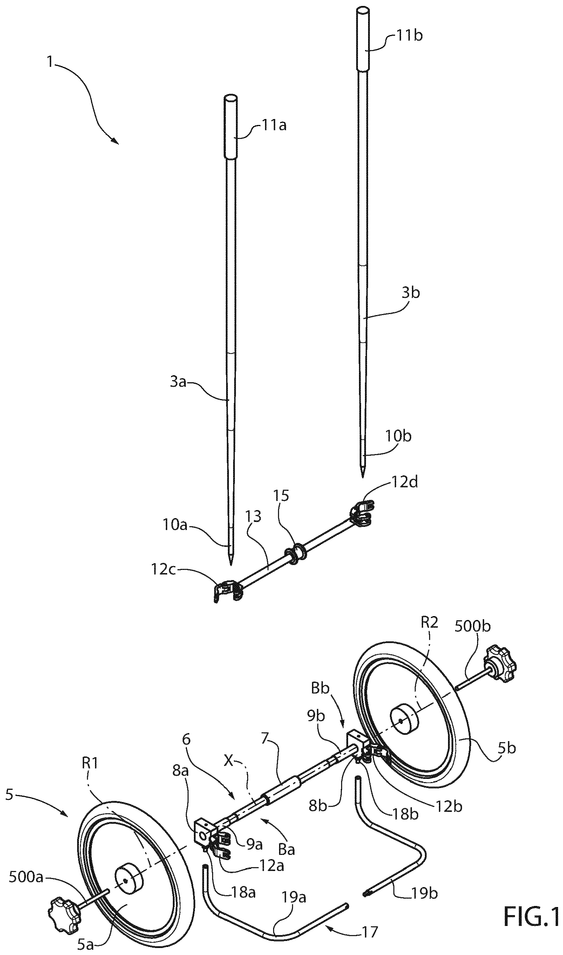

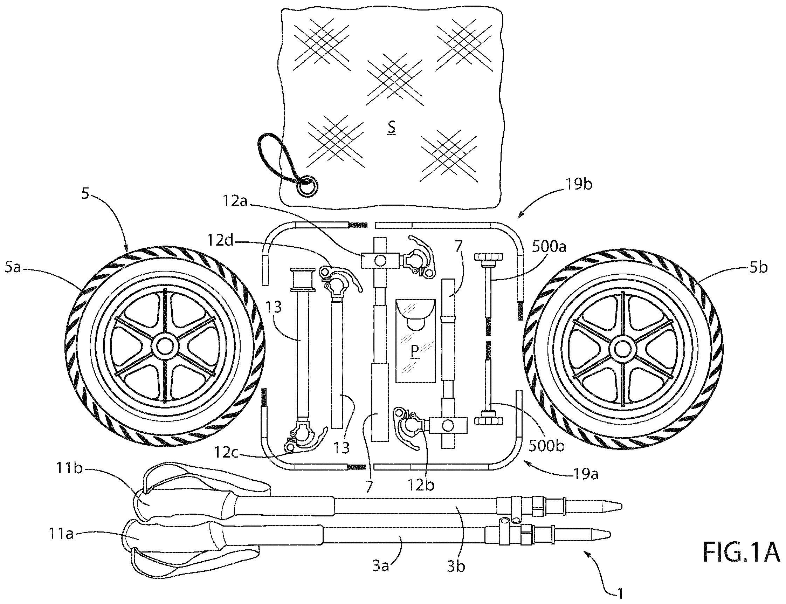

As it will become clearer in the continuation of the description, in this dissertation with the expression "Removable transport device 1" means a transport device 1 that a user with normal skills (therefore not an expert fitter) can easily and quickly assemble and disassemble by simply coupling (for example, screwing together) the various components (possibly by means of suitable attachment units 8a and 8b) so as to be able to easily pass from an operating configuration (such as that schematically illustrated in Figure 2) in which the removable transport device 1 is assembled and ready for use, to an inoperative configuration (such as that schematically illustrated in Figure 1 or even better in Figure 1A) in which the removable transport device 1 is disassembled.

The possibility of disassembling the removable transport device 1 until it assumes this non-operative configuration advantageously allows a reduction of the overall dimensions during storage. In particular, observing figure 1A it is evident that the transport device 1 once disassembled takes up a slightly larger footprint than that of a common packet P of handkerchiefs, schematically illustrated in figure 1A, so that all the components can be easily stored in a bag or envelope such as the one schematically illustrated in figure 1A and indicated by S. In addition, (advantageously), the possibility of disassembling it facilitates its storage and transport, for example on those stretches so inaccessible as to require the removable transport device 1 to be carried on the shoulder or after its use.

With particular reference to the attached figures, advantageously, the removable transport device 1 includes: two side bars 3a, and 3b, intended, in use, to be connected to a harness device (4) wearable by users; a rolling group 5 to allow movement of the removable transport device 1; and a basic structure 6, having at least one crossbar 7 and connected in releasable way to the rolling group 5 and to the side bars 3a and 3b.

In detail, advantageously but not limitedly, the rolling group 5 in turn comprises a first wheel 5a connected in releasable way (for example screwed) to a first side edge Ba of the basic structure 6, in particular of the crossbar 7, and turning around a first rotation axis R1 parallel to (in particular, coinciding with) a longitudinal axis of symmetry X of the crossbar 7 and a second wheel 5b, opposite to the first wheel 5a, and connected in releasable way (for example screwed) to a second side edge Bb of the crossbar 7, opposite the second side edge Ba, and turning around a second rotation axis R2 also parallel to (in particular, coinciding with) the longitudinal axis of symmetry (X) of the crossbar (7). Even more in detail, advantageously but not limitedly, the crossbar 7 includes a threaded seat (not shown) in correspondence with each side edge Ba and Bb and each wheel 5a, 5b comprises a respective pin 500a, 500b adapted to be screwed into such threaded seats (see in particular figure 1). It is understood that the wheels 5a, 5b could be connected in releasable way to the basic structure 6, in particular to the crossbar 7, also by means of any other known type of fastening device.

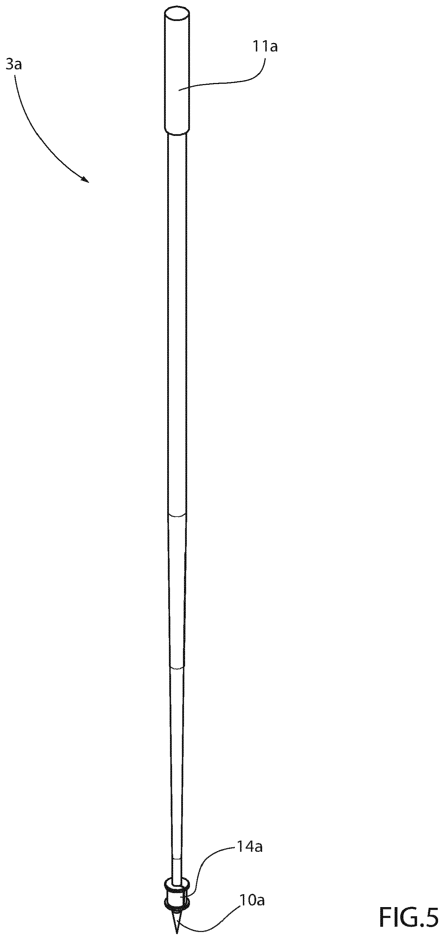

Advantageously but not limitedly, the basic structure 6 further includes a connection unit 8a in releasable way connecting the side bar 3a to a first edge portion 9a of the crossbar 7 and a further connection unit 8b for connecting the side bar 3b in releasable way to a second edge portion 9b of the crossbar 7, opposite the first edge portion 9a. According to some advantageous but non-limiting embodiments (such as the one illustrated in the attached figures - see in particular figures 1, 1A and 5), the side bar 3a comprises a first low-end portion 10a and a first portion of handle 11a, from the opposite side to the low-end portion 10a, and the connection unit 8a is arranged and intended to connect the low-end portion 10a with the edge portion 9a of the crossbar 7. Similarly, the side bar 3b includes a low-end portion 10b and a second portion of handle 11b, on the opposite side with respect to the low-end portion 10b, and the second connection unit 8b is arranged and intended to connect this low-end portion 10b with the edge portion 9b of the crossbar 7.

Advantageously but not limitedly, each connection units 8a and 8b include the relevant clamps 12a and 12b for connecting in a releasable way, respectively, the side bar 3a to the edge portion 9a of the crossbar 7 and the side bar 3b to the second edge portion 9b of the crossbar 7. According to some advantageous but non-limiting embodiments (such as the one illustrated, see in particular Figure 2), these clamps 12a and 12b are of a commercial type and allow quick coupling and release of the side bars 3a and 3b during the assembly and disassembly phases of the removable transport device 1, ensuring at the same time high levels of reliability of the connection during use and rapidity of release or disassembly.

The removable transport device 1 includes, furthermore, a spacer 13 placed crosswise (in particular, perpendicularly) between the side bar 3a and 3b for connecting them in releasable way (that is removable) and keeping them parallel and at a determined distance.

With particular reference to Figure 2, advantageously, the spacer 13 is substantially parallel to the crossbar 7 and is preferably substantially perpendicular to the side bars 3a and 3b.

This spacer 13 ensures the parallelism of the side bars 3a and 3b and acts as a stiffener for the removable transport device 1, improving its stability and reliability even in inaccessible paths.

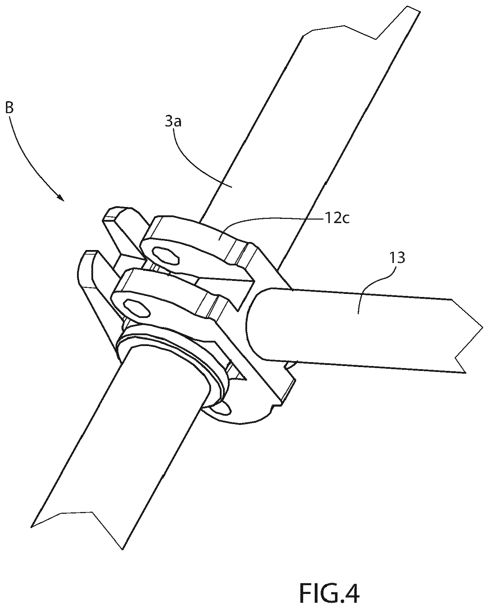

According to some advantageous but not limiting embodiments (such as the one illustrated in Figures 1, 2 and 4), the spacer 13 is connected to the side bars 3a and 3b by means of further clamps 12c and 12d (for which the same considerations set out above in relation to the clamps 12a and 12b), which advantageously but not limitedly are carried by (that is to say they are joined with it) spacer 13 itself. Advantageously but not limitedly, to improve the connection between the side bars 3a and 3b and the connection units 8a and 8b, the side bar 3a comprises a bushing 14a that surrounds the side bar 3a at the low-end portion 10a (see Figure 5); in a similar way, the side bar 3b includes a further bushing (similar to the bushing 14a and not visible in the attached figures) that surrounds the side bar 3b at the low-end portion 10b. The bushing 14a (and the similar one not visible in the attached figures) are advantageously configured to provide a releasable coupling with the clamps 12a and 12b.

Advantageously but not limitedly, the spacer 13 is also configured to receive a fixing element 16 intended to be connected to the load 2, in particular to the bag 2. Even more advantageously but not limitedly, the spacer 13 is configured to receive and maintain in a determined position (that is, to hold in a determined position) a fixing element 16 intended to be connected to the load 2.

In detail, according to some advantageous but not limiting embodiments such as those illustrated in Figures 1 and 2, the spacer 13 includes a position 15 shaped to receive said fixing element 16 intended to be connected to the load 2. With particular reference to the figure 2, advantageously but not limitedly, the position 15 is located in the centre of the spacer 13 therefore holds this fixing element 16 in a central position. This helps the stability of the removable transport device 1 during the use (in particular, when the removable transport device 1 is in the operating configuration and the load 2 is connected to the removable transport device 1, in particular to the spacer 13 and even more particularly to this position 15 by means of this fixing element 16), minimizing the risk of oscillations, rotations or even overturning of the removable transport device 1 once connected to load 2.

Advantageously but not necessarily, the position 15 is an annular seat and comprises two counter-facing containment portions arranged and sized to receive and maintain in position the fixing element 16. Furthermore, advantageously, this fixing element 16 is configured to be connected to the load 2. The load is a bag and the fixing element 16 is a strap that surrounds the position 15 and is adapted to be tied around a handle of the bag 2.

According to some advantageous but non-limiting embodiments, the basic structure 6 includes, in addition, a ground support structure 17 which is configured to allow the removable transport device 1 to be stationed in an upright position and is connected in a releasable way to the crossbar 7 through at least one of the connection units 8a and 8b, preferably (as illustrated in the figure 2) through both the connection units 8a and 8b. In detail, advantageously but not limitedly, each connection unit 8a and 8b includes a respective pin 18a, 18b configured to be inserted, for example to screw or snap together, in a respective position (not visible in the attached figures) of the ground support structure 17 so as to connect said structure 17 to the basic structure 6.

In detail, according to some embodiments such as the one illustrated in Figures 1 and 2, the ground support structure 17 is C-shaped and includes a first part 19a and a second part 19b which can be coupled together (for example, which can be screwed into one other or that can be inserted one into the other). In this case, advantageously but not necessarily, the first part 19a is joined to the connection unit 8a, in particular to the pin 18a, while the second part 19b is joined to the connection unit 8b, in particular to the pin 18b.

According to some advantageous but not exclusive embodiments, the side bar 3a and 3b are telescopic sticks.

Even more in detail, according to some advantageous but not exclusive embodiments, the side bar 3a and 3b include (in particular, they consist of) rackets for trekking, advantageously telescopic.

This allows to adapt the removable transport device 1 to different users and to further reduce the overall dimensions of the removable transport device 1 when it is not in use (see Figure 1A). Furthermore, this facilitates the transport of the removable transport device 1 on particularly inaccessible paths where this (the removable transport device 1) cannot be towed but must be carried by the user, since it reduces the size of the telescopic side bar 3a and 3b. It will be possible to reduce the size of the removable transport device 1, for example by transporting it by means of a bag or envelope C as schematically illustrated in figure 1A or by means of said backpack or said bag 2 (intended to be carried by the removable transport device 1) as explained below. In detail, by reducing the length of the side bars 3a and 3b until they fall within the overall dimensions of the bag 2, the transport device 1 (advantageously at least partially disassembled) can be carried on the shoulder by the user who will wear (in a traditional way) the bag 2 connected to the removable transport device 1 itself.

Furthermore, in order to reduce as much as possible, the dimensions of the removable transport device 1 when it is disassembled (i.e. not in use), advantageously but not limitedly, the spacer 13 comprises (in particular, it is formed by) two distinct bars which can be coupled to each other in a releasable way (by a user with common skills) and each having a clamp 12c or 12d at one end (see Figure 1A).

Again with the same aim of reducing the overall dimensions of the removable transport device 1 as much as possible (as an alternative or in combination with the above, advantageously but not limitedly), the crossbar 7 comprises two portions which can be coupled together in a releasable way, in particular one which can be inserted into the other or coupled by means of quick coupling devices, and each having at one end one of the above described connection unit 8a and 8b (see Figure 1A) .

Advantageously but not limitedly, the removable transport device 1 is made of aluminium or carbon fibre. However, the removable transport device 1 could also be made of fiberglass, kevlar, wood, bamboo and other similar materials which ensure adequate strength without excessive weight increase.

It is also understood that the rolling group 5, instead of the pair of wheels 5a, 5b described above, could consist in a single wheel, advantageously arranged in a central position with respect to the basic structure 6, or other rolling means, for example a ski skate.

It is also understood that said clamps 12a, 12b, 12c and 12d could be replaced by any other alternative attachment means (for example screw-nut systems) capable of guaranteeing the same level of connection reliability and ease of use or in detail of convenience and speed of disassembly.

According to a further aspect of the present invention, a carriage group 100 of a bag 2 (i.e. a transport system or kit for a bag 2) is described schematically and partially shown in Figure 2.

The carriage group 100 includes: a removable transport device 1 like the one described above; at least one harness device 4 wearable by a user and connected to the side bars 3a and 3b to allow, in use, the user to tow the removable transport device 1; and a fixing element 16 combined to the spacer 13 (in particular to said position 15 of the spacer 13) and attachable to the bag 2 to attach the bag 2 to the removable transport device 1 so that the user, by pulling the removable transport device 1 , can carry the bag 2.

Advantageously but not limitedly, the harness device 4 includes (in particular, it consists of) an ergonomic attachment device, for example in the case illustrated in Figure 2, a belt of harness 40 that can be adjusted to adapt to different users.

Advantageously but not limitedly, the harness belt 40 comprises (in particular, it is provided with) at least two eyelets 4c arranged and configured to receive the rods, the lateral rods 3a, 3b (in particular, at least part of the handle portions 11a and 11b of the lateral rods 3a, 3b). Advantageously but not limitedly, the adjustable belt of harness 40 further comprises two harness devices 4a and 4b to keep the side bars 3a, 3b connected to the belt of harness 40.

According to some advantageous but not limiting embodiments such as the one illustrated (for example in Figure 2), said eyelets 4c are arranged on the belt of harness 40 (in particular, they are fixed to the belt of harness 40 arranged) opposite each other so as to result in correspondence with the user's hips when the user wears the belt of harness 40 (see Figure 2), and the harness devices 4a and 4b are each advantageously fastened to the respective eyelet 4c.

Alternatively, or in combination, the harness device 4 includes (in particular, it consists of) an elastic band 400 intended to be carried (i.e. hung) around the neck by the user and hooked to the side bars 3a, 3b, in detail to the portions of handle 11a and 11b of the side bars 3a, 3b.

Furthermore, according to some advantageous but not limiting embodiments, the belt of harness 40 and / or the elastic band 400 include adjustment means to adapt to the user ensuring the greatest comfort of use.

According to other embodiments not illustrated, the harness device 4 could include (alternatively or in combination with the above reported) straps so as to improve the comfort of the user who can tow the removable transport device 1 like a backpack.

Advantageously but not limitedly, the fixing element 16 includes (in particular, it consists of) at least one belt configured to at least partially surround the spacer 13, advantageously in correspondence with the position 15, and to be connected to the load 2, in particular to the bag 2, at the opposite end (as shown in Figure 2).

Advantageously but not limitedly, the fixing element 16 also includes, furthermore, at least one locking buckle (not shown) intended to be fixed to the load 2, in particular to the bag 2, even more particularly to a handle of the bag 2.

The removable transport device 1 described above and the carriage group 100 for transporting a bag 2 which comprises it present numerous advantages, among which we mention the following.

The removable transport device 1 is stable and sturdy and allows the transport of a load 2, in particular a bag 2, in conditions of safety and comfort even on particularly impervious ground.

Furthermore, the removable transport device 1 is easy to disassemble, even by a not expert user, as it is made up of components that are connected to each other in a removable way, for example thanks to the above-described clamps 12a, 12b, 12c and 12d, which can be easily opened and closed, to assemble and disassemble the removable transport device 1.

Finally, the removable transport device 1 of the invention is easy and practical to transport and store even when it is not in use, since the various components have reduced dimensions so that they can be stored in a backpack or in a bag once they have been disconnected from each other.

## Claims

1. Removable transport device (1) configured to carry a load (2) (in particular a bag (2)) and intended, in use, to be towed by users; the removable transport device (1) comprises:
a first side bar (3a) and a second side bar (3b) intended, in use, to be connected to a harness device (4) wearable by users;
a spacer (13) placed between the first side bar (3a) and the second side bar (3b) and extending crosswise (in particular, perpendicularly) to said first side bar (3a) and second side bar (3b) for connecting in releasable way and keeping parallel and at a determined distance said first side bar (3a) and second side bar (3b); the spacer (13) being shaped for receiving a fixing element (16) intended to be connected with a load (2);
a rolling group (5); and
a basic structure (6) which is connected to the rolling group (5) in releasable way and comprises a crossbar (7) parallel to said spacer (13), a first connection unit (8a) for connecting in releasable way the first side bar (3a) to a first portion of the end (9a) of said crossbar (7) and a second connection unit (8b) for connecting in releasable way said second side bar (3b) to a second portion of the end (9b) of said crossbar (7), opposite to the first portion of end (9a).

2. Removable transport device (1), according to the claim 1, wherein said rolling group (5) comprises: a first wheel (5a) connected in releasable way to a first side edge (Ba) of said basic structure (6) and turning around a first rotation axis (R1) parallel to (in particular, coinciding with) longitudinal axis of symmetry (X) of said crossbar (7) and a second wheel (5b), opposite to said first wheel (5a), and connected in releasable way to a second side edge (Bb) of said basic structure (6), opposite to the first side edge (Ba), and turning around a second rotation axis (R2) parallel to (in particular, coinciding with) said longitudinal axis of symmetry (X) of said crossbar (7).

3. Removable transport device (1) according to the claim 1 or 2, wherin:
said first side bar (3a) comprises a first low-end portion (10a) and a first portion of handle (11a), on the opposite side of said first low-end portion (10a);
said second side bar (3b) including a second low-end portion (10b) and a second portion of handle (11b), on the opposite side of said second low-end portion (10b);
said first connection unit (8a) and said second connection unit (8b) being arranged and intended for connecting, respectively, sais first low-end portion (10a) with said first edge portion (9a) of said crossbar (7) and said second low-end portion (10b) with the second edge portion (9b) of the crossbar (7).

4. Removable transport device (1) according to the claim 3, wherein said first connection unit (8a) and said second connection unit (8b) comprise, respectively, a first clamp (12a) for connecting in a releasable way said first side bar (3a) to said first edge portion (9a) of the crossbar (7) and a second clamp (12b) for connecting in releasable way said second side bar (3b) to said second edge portion (9b) of said crossbar (7).

5. Removable transport device (1) according to the claim 4, wherein said first side bar (3a) comprises a first bushing (14a) surrounding the first side bar (3a) at said first low-end portion (10a) in order to create a releasable coupling with said first clamp (12a) and said second side bar (3b) includes a second bushing (14b) surrounding said second side bar (3b) in correspondence with said second low-end portion (10b) in order to create a releasable coupling with said second clamp (12b).

6. Removable transport device (1) according to any previous claim, wherein: said basic structure (6) comprises a ground support structure (17) intended to allow the removable transport device (1) to be parked in an upright position and it is connected in releasable way to said crossbar (7) through at least one of said first connection unit (8a) and said second connection unit (8b).

7. Removable transport device (1) according to the claim 6, wherein said ground support structure (17) is "C" shaped and comprises a first side (19a) and a second side (19b) coupling each other in releasable way; in use, said first side (19a) being connected in releasable way to said first connection unit (8a) and said second side (19b) being connected in releasable way to said second connection unit (8b).

8. Removable transport device (1) according to any previous claim, wherein said spacer (13) includes a third clamp (12c) in order to create a releasable connection with said second side bar (3b) through a fourth clamp (12d).

9. Removable transport device (1) according to the claim 8, wherein said spacer (13) comprises two bars that can be coupled each other in releasable way and each one having at the top one of said third clamp (12c) and said fourth clamp (12d).

10. Removable transport device (1) according to any previous claim, wherein said spacer (13) comprises a position (15) shaped to receive said fixing element (16).

11. Removable transport device (1) according to the claim 10, wherein said position (15) is located in the centre of the spacer (13) .

12. Removable transport device (1) according to any previous claim, wherein said first side bar (3a) and said second side bar (3b) comprise (in particular, consisted in) a respective trekking racket.

13. Removable transport device (1) according to any previous claim, wherein said crossbar (7) comprises two pieces that that which can be releasably coupled to each other.

14. Carriage group (100) of a bag (2) including:
a removable transport device (1) according to any one of claims from 1 to 12 for carriage of a bag;
a fixing element (16) coupled to a spacer (13) (in particular to said position (15) of said spacer (13)) and attachable to said bag (2) in order to attach said bag (2) to said removable transport device (1);
and at least one harness device (4) wearable by users and attachable to said fist side bar (3a) and to said second side bar (3b) to allow, in use, said users to tow said removable transport device (1) .

15. Carriage group (100) according to the claim 14, wherein said harness device (4) comprises an adjustable belt of harness (40) and/or an elastic band (400) of harness.
